# EUROPÄISCHE PATENTANMELDUNG

(11) **EP 1 335 332 A2**
(43) Veröffentlichungstag der Anmeldung: **13.08.2003**
(21) Anmeldenummer: 02028472.5
(22) Anmeldetag: 19.12.2002
(51) Int. Cl.: G07F 7/10

(54) **Fernadministration von Wertkarten**

(30) Priorität: 07.02.2002 DE 10205025
(71) Anmelder: Deutsche Telekom AG, 53113 Bonn (DE)
(72) Erfinder: Weise, Frank, Dipl.-Ing., 95460 Bad Berneck (DE)

(57) **Zusammenfassung**

Die Erfindung befaßt sich mit einem Verfahren zur Fernadministration von Wertkarten mittels Dateneingabe an einem Telefon, einem Personalcomputer oder einem beliebigen anderen Kommunikationsendgerät. Nach der Eingabe werden die in der Datenbank eines entfernten Rechnersystems geführten betreffenden Kartendaten mit einem Sperrvermerk versehen. Es erfolgen weiterhin Rückmeldungen über den Kartenstatus.

## Beschreibung

Die Erfindung befasst sich mit einem Verfahren zur Fernadministration von Wertkarten. Als Wertkarten werden hier alle Formen von Geldkarten, Kreditkarten und ec-Karten, Zugangsberechtigungen und alle anderen Karten mit im wesentlichen sicherheitsrelevantem Inhalt betrachtet.

Der Gebrauch dieser Wertkarten hat in den letzten Jahren eine enorme Steigerung erfahren. Es werden mittlerweile in den Geldbörsen eine Vielzahl von Karten mitgeführt.

Nun ergeben sich bei Verlust oder Diebstahl von Wertkarten erhebliche Probleme. Zunächst muß verhindert werden, daß Unberechtigte in der Lage sind, auf Kosten des Besitzers Geschäfte zu tätigen, Bargeld abzuheben oder sich etwa Zutritt zu Bereichen mit kartenbedienten Sicherheitsbereichen zu verschaffen.

Bei der derzeitigen Verfahrensweise muß ein Telefongespräch geführt werden, um dann im Dialog mit einer Person eine betroffene Wertkarte als gestohlen zu kennzeichnen. In vielen Fällen ist eine gebührenfreie Rufnummer anzuwählen. Diese ist aus dem Ausland in der Regel nicht erreichbar. Oft ist eine Rufnummer nicht bekannt, da vergessen wurde, sich für einen etwaigen Kartenverlust präventiv vorzubereiten. Das Sperren einer Karte kann so durch Nachfrage der richtigen Telefonnummer zeitaufwendig werden. Die Wahrscheinlichkeit eines Mißbrauchs erhöht sich. Unterbleibt eine Sperre gänzlich, kann der Karteninhaber für den entstehenden Verlust haftbar gemacht werden.

Nun sind etwa zum Abfragen von Geldbeträgen, welche auf einer Karte verbucht sind, automatische Methoden bekannt. In der DE 42 31 789 A1 wird beispielsweise ein System beschrieben, mit welchem über Telefon der aktuelle Kartenstatus einer Wertkarte abgefragt werden kann. Nicht betrachtet wird hier allerdings ein Verfahren, aus Ferne eine Karte komplett zu Sperren.

Es ist daher Aufgabe der vorliegenden Erfindung, die Nachteile des derzeitigen Verfahrens zum Sperren von Wertkarten dahingehend zu verbessern, daß eine Sperre jederzeit schnell und problemlos auch aus dem Ausland erfolgen kann.

Die Aufgabe wird in Verbindung mit dem Oberbegriff des Patentanspruchs 1 dadurch gelöst, daß nach der Eingabe einer Ziffern- und/oder Zahlenfolge mittels eines Kommunikationsendgerätes die in der Datenbank eines entfernten Rechnersystems geführten betreffenden Kartendaten mit einem Sperrvermerk versehen werden.

Vorteilhaft ist hierbei, daß die Sperraktion automatisch und ohne Anwesenheit von kostspieligem Personal durchgeführt werden kann. Hilfreich ist beim beschriebenen Verfahren die Einrichtung einer leicht zu merkenden Telefonnummer, welche in Verbindung mit einem einer oder auch mehreren Karten zugeordnetem Passwort die Sperre ermöglicht. So wird die gegebenenfalls nicht mehr zugreifbare Kartennummer nicht benötigt. Alternativ kann der Kunde eine TAN-Liste von der kartenführenden Institution erhalten, welche er zur Sperre heranzieht. Als Eingabegerät kann ein Festnetz- oder Mobiltelefon mit der Möglichkeit zur Mehrfachfrequenzwahl dienen. Über das Internet, inclusive aller beteiligten Intranets und aller Weiterentwicklungen, sind hier weitere Möglichkeiten eines preiswerten weltweiten Zugriffs gegeben.

Nach einer Sperre kann die gesamte Information hierüber an Rechnernetze von Banken, Polizei, Einzelhandel und andere beteiligte Institutionen versendet werden. So ist eine schnelle Informationsverteilung möglich, welche etwaigen Betrugsversuchen entgegenwirkt.

Als Sicherheit für den Inhaber einer zu sperrenden Wertkarte kann von zentralen Rechnersystems, etwa nach dem Setzen eines Sperrbits und dem Weiterleiten der Sperrinformation an die betreffenden internen und externen Stellen, eine positiv-Rückmeldung erfolgen. Selbstverständlich kann auch während des Sperrvorganges ein Dialog mit dem Karteninhaber erfolgen, welcher ihn bei Fehleingaben korrigiert oder Informationen über die gesperrte Karte oder auch eine vorher festgelegte nun zu sperrende Kartenauswahl übergibt.

In ähnlichem Ablauf kann der Kartenbesitzer etwa nach dem Wiederauffinden seiner Wertkarte diese wieder entsperren. Hier ist aus Sicherheitsgründen die Verwendung der schon erwähnten TAN-Liste vorteilhaft.

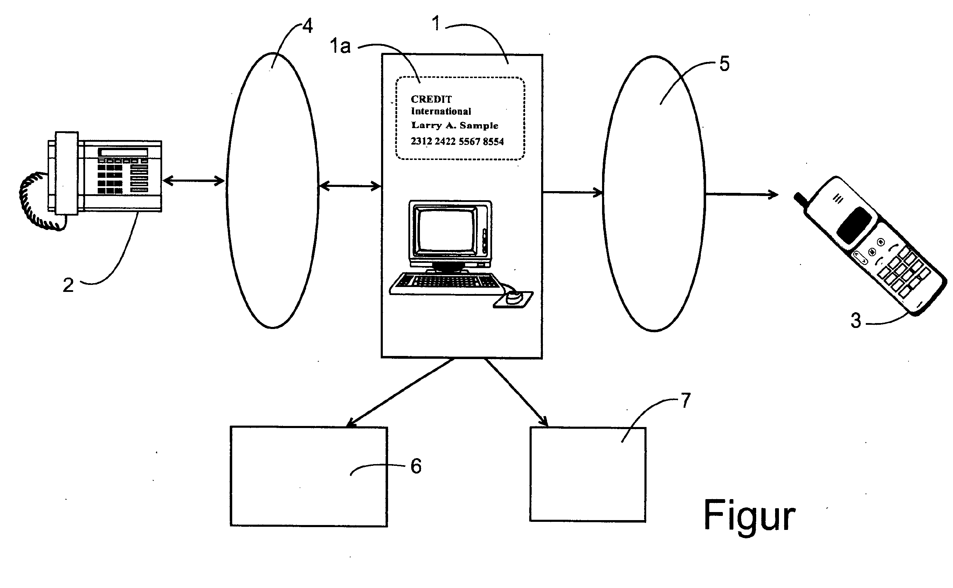

Weitere Einzelheiten der Erfindung werden in der Zeichnung anhand von schematisch dargestellten Ausführungsbeispielen beschrieben.

Hierbei zeigt die Figur ein zentrales Rechnersystem **1,** in welchem sich die Daten einer Wertkarte oder Kreditkarte **1a** befindet. Bei Sperrbedarf kann über eine Tastatureingabe am Festnetztelefon **2** über das Netz **4** im Rechnersystem **1** der Sperrvorgang ausgelöst werden. Ebenso ist dieser Vorgang über ein Mobiltelefon **3** im Mobilfunknetz **5** beispielsweise durch Mehrfachfrequenzwahl möglich. Der neue Kartenstatus <gesperrt> wird nun an die Rechnersysteme der Bedarfsträger wie Banken **6** und deren Geldautomaten oder beispielsweise direkt an Kassensysteme des Einzelhandels übertragen. Über den gleichen Weg sind auch Rückmeldungen zum Terminal des Kunden möglich.

## Patentansprüche

1. Verfahren zur Fernadministration von Wertkarten mittels Dateneingabe an einem Telefon, einem Personalcomputer oder einem beliebigen anderen Kommunikationsendgerät,
**dadurch gekennzeichnet, daß** nach der Eingabe die in der Datenbank eines entfernten Rechnersystems geführten betreffenden Kartendaten mit einem Sperrvermerk versehen werden.

2. Verfahren nach Anspruch 1, **dadurch gekennzeichnet, daß** die aktualisierten Kartendaten ohne weitere Zeitverzögerung an andere Rechnersysteme übertragen werden.

3. Verfahren nach Anspruch 1 oder 2, **dadurch gekennzeichnet, daß** nach der sicheren Sperrung der Wertkarte eine Rückmeldung an eine oder mehrere vorher festgelegte Einrichtungen erfolgt.
